# EUROPEAN PATENT APPLICATION

(11) **EP 4 465 550 A1**
(43) Date of publication of application: **20.11.2024**
(21) Application number: 24175031.4
(22) Date of filing: 09.05.2024
(51) Int. Cl.: H04B 7/06, H04W 4/02

(54) **MOBILE APPARATUS DYNAMIC STATE-BASED TARGET TRACKING IN BEAMSTEERING NETWORK**

(30) Priority: 15.05.2023 US 202318317302
(71) Applicant: HERE Global B.V., 5611 ZT Eindhoven (NL)
(72) Inventor: Wirola, Lauri Aarne Johannes, 33100 Tampere (FI); Ivanov, Pavel, 33100 Tampere (FI); Luomi, Marko, 33100 Tampere (FI); Nurminen, Henri, 33100 Tampere (FI)
(74) Representative: Potter Clarkson

(57) **Abstract**

A base station apparatus configured to control operation of a base station causes the base station to perform conical scanning of a mobile apparatus. The base station is configured to communicate via wireless communications using beamforming. A communication session between the base station and the mobile apparatus has been established, and the conical scanning of the mobile apparatus comprises transmitting a tracking beam that rotates about a path centered on a position associated with the mobile apparatus and characterized by a radius. The base station apparatus receives a dynamic state communication indicating a dynamic state of the mobile apparatus; determines, based at least on the dynamic state of the mobile apparatus, a new radius; and causes the base station to perform the conical scanning by transmitting the tracking beam that rotates about the path centered on the position associated with the mobile apparatus and characterized by the new radius.

## Description

### TECHNOLOGICAL FIELD

An example embodiment relates to target tracking in beam steering networks. An example embodiment relates to performing target tracking in a beam steering network using mobile apparatus dynamic state information.

### BACKGROUND

Beam steering networks, such as 5G, are configured to provide high bandwidth communications by targeting mobile apparatuses with respective narrow radio beams. For example, during a communication session between a base station and a mobile apparatus, the base station transmits a narrow radio beam directed toward the mobile apparatus. However, if the mobile apparatus is moving while the base station is communicating with the mobile apparatus, the base station will need to steer the narrow radio beam to the current location of the mobile apparatus to prevent the communication session between the base station and mobile apparatus from being interrupted.

Therefore, a problem exists as to how to track the location of a mobile apparatus to provide high bandwidth communications via a beam steering network.

### BRIEF SUMMARY

Various embodiments provide methods, apparatus, systems, and computer program products for performing tracking of a mobile apparatus in a beam steering network using dynamic state information corresponding to the mobile apparatus. In various embodiments, a communication session is established between a base station and a mobile apparatus. The base station performs conical scanning of the mobile apparatus. For example, the base station transmits a tracking beam that rotates about a path centered on a position associated with the mobile apparatus and characterized by a radius. Any changes in the signal-to-noise ratio of the tracking beam received by the mobile apparatus as the tracking beam rotates about the path is indicative in changes in the location of the mobile apparatus with respect to the position associated with the mobile apparatus about which the path is centered. Dynamic state information is used to determine the radius of the path about which the tracking beam rotates.

In various embodiments, the dynamic state information is indicative of the dynamic state of the mobile apparatus. For example, the mobile apparatus includes one or more sensors that are configured to capture information that may be indicative of movement of the mobile apparatus, in various embodiments. For example, the dynamic state of the mobile apparatus corresponds to a velocity vector, magnitude of a velocity, acceleration vector, magnitude of an acceleration and/or the like of the mobile apparatus, in various embodiments.

In an example embodiment, a base station apparatus causes the base station to perform conical scanning of a mobile apparatus. The base station apparatus is configured to control operation of the base station, which is configured to communicate with the mobile apparatus via wireless communications using beamforming. A communication session between base station and the mobile apparatus has been established. The conical scanning of the mobile apparatus includes transmitting a tracking beam that rotates about a path centered on a position associated with the mobile apparatus and characterized by a radius. The base station apparatus receives a dynamic state communication generated by the mobile apparatus. The dynamic state communication providing an indication of a dynamic state of the mobile apparatus. For example, the dynamic state communication may include dynamic state information for the mobile apparatus. The base station apparatus determines a new radius based at least in part on the dynamic state of the mobile apparatus. The base station causes the base station to perform conical scanning of the mobile apparatus by transmitting the tracking beam that rotates about the path centered on the position associated with the mobile apparatus and characterized by the new radius.

According to an aspect of the present disclosure, a method for performing mobile apparatus dynamic state-based target tracking in a beam steering network is provided. In an example embodiment, the method comprises causing, by a base station apparatus, a base station to perform conical scanning of a mobile apparatus. The base station apparatus is configured to control operation of the base station and the base station is configured to communicate via wireless communications using beamforming. A communication session between the base station and the mobile apparatus has been established, and the conical scanning of the mobile apparatus comprises transmitting a tracking beam that rotates about a path centered on a position associated with the mobile apparatus and characterized by a radius. The method further comprises receiving, by the base station apparatus, a dynamic state communication generated by the mobile apparatus, the dynamic state communication providing an indication of a dynamic state of the mobile apparatus; determining, by the base station apparatus and based at least in part on the dynamic state of the mobile apparatus, a new radius; and causing, by the base station apparatus, the base station to perform the conical scanning of the mobile apparatus by transmitting the tracking beam that rotates about the path centered on the position associated with the mobile apparatus and characterized by the new radius.

In an example embodiment, the dynamic state of the mobile apparatus corresponds to at least one of (a) a magnitude of a velocity of the mobile apparatus or (b) a magnitude of an acceleration of the mobile apparatus.

In an example embodiment, (a) the new radius is larger than the radius when the dynamic state of the mobile apparatus has substantially changed since a determination of the radius and (b) the new radius is the same as or smaller than the radius when the dynamic state of the mobile apparatus has not substantially changed since the determination of the radius.

In an example embodiment, the position associated with the mobile apparatus is modified based on a location along the path wherein the base station apparatus detects a highest signal-to-noise ratio of a return tracking beam.

In an example embodiment, the new radius is determined based at least in part on the dynamic state of the mobile apparatus and a dynamic state-radius model.

In an example embodiment, the dynamic state-radius model is a look-up table.

In an example embodiment, the dynamic state-radius model is a machine learning-trained model.

In an example embodiment, the dynamic state-radius model is trained during the communication session between the base station and the mobile apparatus.

In an example embodiment, the dynamic state-radius model is particular to the mobile apparatus or a characteristic of the mobile apparatus.

In an example embodiment, the dynamic state communication comprises sensor data captured by one or more sensors of the mobile apparatus and corresponding to motion of the mobile apparatus.

In an example embodiment, the dynamic state communication comprises at least one of a magnitude of an acceleration of the mobile apparatus or a magnitude of a velocity of the mobile apparatus.

In an example embodiment, the dynamic state communication comprises a dynamic state index configured to identify a class corresponding to the dynamic state of the mobile apparatus.

In an example embodiment, the base station apparatus receives a plurality of dynamic state communications in a periodic or regular manner during the communication session and the base station apparatus determines the new radius responsive to receiving each respective dynamic state communication of the plurality of dynamic state communications.

In an example embodiment, the dynamic state communication is provided by the mobile apparatus in response to the mobile apparatus identifying a change in the mobile apparatuses dynamic state.

According to another aspect of the present disclosure, an apparatus is provided. In an example embodiment, the apparatus is configured to control operation of a base station configured to communicate via wireless communications using beam steering. The apparatus comprises at least one processor and at least one memory storing computer program code and/or instructions. The at least one memory and the computer program code and/or instructions are configured to, with the processor, cause the apparatus to at least cause a base station to perform conical scanning of a mobile apparatus. A communication session between the base station and the mobile apparatus has been established, and the conical scanning of the mobile apparatus comprises transmitting a tracking beam that rotates about a path centered on a position associated with the mobile apparatus and characterized by a radius. The at least one memory and the computer program code and/or instructions are further configured to, with the processor, cause the apparatus to at least receive a dynamic state communication generated by the mobile apparatus, the dynamic state communication providing an indication of a dynamic state of the mobile apparatus; determine, based at least in part on the dynamic state of the mobile apparatus, a new radius; and cause, the base station to perform the conical scanning of the mobile apparatus by transmitting the tracking beam that rotates about the path centered on the position associated with the mobile apparatus and characterized by the new radius.

In an example embodiment, the dynamic state of the mobile apparatus corresponds to at least one of (a) a magnitude of a velocity of the mobile apparatus or (b) a magnitude of an acceleration of the mobile apparatus.

In an example embodiment, (a) the new radius is larger than the radius when the dynamic state of the mobile apparatus has substantially changed since a determination of the radius and (b) the new radius is the same as or smaller than the radius when the dynamic state of the mobile apparatus has not substantially changed since the determination of the radius.

In an example embodiment, the position associated with the mobile apparatus is modified based on a location along the path wherein the base station apparatus detects a highest signal-to-noise ratio of a return tracking beam.

In an example embodiment, the new radius is determined based at least in part on the dynamic state of the mobile apparatus and a dynamic state-radius model.

In an example embodiment, the dynamic state-radius model is a look-up table.

In an example embodiment, the dynamic state-radius model is a machine learning-trained model.

In an example embodiment, the dynamic state-radius model is trained during the communication session between the base station and the mobile apparatus.

In an example embodiment, the dynamic state-radius model is particular to the mobile apparatus or a characteristic of the mobile apparatus.

In an example embodiment, the dynamic state communication comprises sensor data captured by one or more sensors of the mobile apparatus and corresponding to motion of the mobile apparatus.

In an example embodiment, the dynamic state communication comprises at least one of a magnitude of an acceleration of the mobile apparatus or a magnitude of a velocity of the mobile apparatus.

In an example embodiment, the dynamic state communication comprises a dynamic state index configured to identify a class corresponding to the dynamic state of the mobile apparatus.

In an example embodiment, the base station apparatus receives a plurality of dynamic state communications in a periodic or regular manner during the communication session and the base station apparatus determines the new radius responsive to receiving each respective dynamic state communication of the plurality of dynamic state communications.

In an example embodiment, the dynamic state communication is provided by the mobile apparatus in response to the mobile apparatus identifying a change in the mobile apparatuses dynamic state.

In still another aspect of the present disclosure, a computer program product is provided. In an example embodiment, the computer program product comprises at least one non-transitory computer-readable storage medium having computer-readable program code and/or instructions portions stored therein. The computer-readable program code and/or instructions portions comprise executable portions configured, when executed by a processor of an apparatus configured to control operation of a base station, to cause the apparatus to cause a base station to perform conical scanning of a mobile apparatus. The base station is configured to communicate via wireless communications using beam steering. A communication session between the base station and the mobile apparatus has been established, and the conical scanning of the mobile apparatus comprises transmitting a tracking beam that rotates about a path centered on a position associated with the mobile apparatus and characterized by a radius. The computer-readable program code and/or instructions portions comprise executable portions further configured, when executed by a processor of the apparatus, to cause the apparatus to receive a dynamic state communication generated by the mobile apparatus, the dynamic state communication providing an indication of a dynamic state of the mobile apparatus; determine, based at least in part on the dynamic state of the mobile apparatus, a new radius; and cause, the base station to perform the conical scanning of the mobile apparatus by transmitting the tracking beam that rotates about the path centered on the position associated with the mobile apparatus and characterized by the new radius.

In an example embodiment, the dynamic state of the mobile apparatus corresponds to at least one of (a) a magnitude of a velocity of the mobile apparatus or (b) a magnitude of an acceleration of the mobile apparatus.

In an example embodiment, (a) the new radius is larger than the radius when the dynamic state of the mobile apparatus has substantially changed since a determination of the radius and (b) the new radius is the same as or smaller than the radius when the dynamic state of the mobile apparatus has not substantially changed since the determination of the radius.

In an example embodiment, the position associated with the mobile apparatus is modified based on a location along the path wherein the base station apparatus detects a highest signal-to-noise ratio of a return tracking beam.

In an example embodiment, the new radius is determined based at least in part on the dynamic state of the mobile apparatus and a dynamic state-radius model.

In an example embodiment, the dynamic state-radius model is a look-up table.

In an example embodiment, the dynamic state-radius model is a machine learning-trained model.

In an example embodiment, the dynamic state-radius model is trained during the communication session between the base station and the mobile apparatus.

In an example embodiment, the dynamic state-radius model is particular to the mobile apparatus or a characteristic of the mobile apparatus.

In an example embodiment, the dynamic state communication comprises sensor data captured by one or more sensors of the mobile apparatus and corresponding to motion of the mobile apparatus.

In an example embodiment, the dynamic state communication comprises at least one of a magnitude of an acceleration of the mobile apparatus or a magnitude of a velocity of the mobile apparatus.

In an example embodiment, the dynamic state communication comprises a dynamic state index configured to identify a class corresponding to the dynamic state of the mobile apparatus.

In an example embodiment, the base station apparatus receives a plurality of dynamic state communications in a periodic or regular manner during the communication session and the base station apparatus determines the new radius responsive to receiving each respective dynamic state communication of the plurality of dynamic state communications.

In an example embodiment, the dynamic state communication is provided by the mobile apparatus in response to the mobile apparatus identifying a change in the mobile apparatuses dynamic state.

According to yet another aspect, an apparatus is provided. In an example embodiment, the apparatus comprises means for causing a base station to perform conical scanning of a mobile apparatus. The base station is configured to communicate via wireless communications using beamforming. A communication session between the base station and the mobile apparatus has been established, and the conical scanning of the mobile apparatus comprises transmitting a tracking beam that rotates about a path centered on a position associated with the mobile apparatus and characterized by a radius. The apparatus comprises means for receiving a dynamic state communication generated by the mobile apparatus, the dynamic state communication providing an indication of a dynamic state of the mobile apparatus. The apparatus comprises means for determining, based at least in part on the dynamic state of the mobile apparatus, a new radius. The apparatus comprises means for causing the base station to perform the conical scanning of the mobile apparatus by transmitting the tracking beam that rotates about the path centered on the position associated with the mobile apparatus and characterized by the new radius.

The following numbered paragraphs are disclosed:
1. A method comprising:
   causing, by a base station apparatus, a base station to perform conical scanning of a mobile apparatus, wherein the base station apparatus is configured to control operation of a base station configured to communicate via wireless communications using beamforming, a communication session between the base station and the mobile apparatus has been established, and the conical scanning of the mobile apparatus comprises transmitting a tracking beam that rotates about a path centered on a position associated with the mobile apparatus and characterized by a radius;
   receiving, by the base station apparatus, a dynamic state communication generated by the mobile apparatus, the dynamic state communication providing an indication of a dynamic state of the mobile apparatus;
   determining, by the base station apparatus and based at least in part on the dynamic state of the mobile apparatus, a new radius; and
   causing, by the base station apparatus, the base station to perform the conical scanning of the mobile apparatus by transmitting the tracking beam that rotates about the path centered on the position associated with the mobile apparatus and characterized by the new radius.
2. The method of paragraph 1, wherein the dynamic state of the mobile apparatus corresponds to at least one of (a) a magnitude of a velocity of the mobile apparatus or (b) a magnitude of an acceleration of the mobile apparatus.
3. The method of paragraph 1, wherein (a) the new radius is larger than the radius when the dynamic state of the mobile apparatus has substantially changed since a determination of the radius and (b) the new radius is the same as or smaller than the radius when the dynamic state of the mobile apparatus has not substantially changed since the determination of the radius.
4. The method of paragraph 1, wherein the position associated with the mobile apparatus is modified based on a location along the path wherein the base station apparatus detects a highest signal-to-noise ratio of a return tracking beam.
5. The method of paragraph 1, wherein the new radius is determined based at least in part on the dynamic state of the mobile apparatus and a dynamic state-radius model.
6. The method of paragraph 5, wherein the dynamic state-radius model is a look-up table.
7. The method of paragraph 5, wherein the dynamic state-radius model is a machine learning-trained model.
8. The method of paragraph 7, wherein the dynamic state-radius model is trained during the communication session between the base station and the mobile apparatus.
9. The method of paragraph 7, wherein the dynamic state-radius model is particular to the mobile apparatus or a characteristic of the mobile apparatus.
10. The method of paragraph 1, wherein the dynamic state communication comprises sensor data captured by one or more sensors of the mobile apparatus and corresponding to motion of the mobile apparatus.
11. The method of paragraph 1, wherein the dynamic state communication comprises at least one of a magnitude of an acceleration of the mobile apparatus or a magnitude of a velocity of the mobile apparatus.
12. The method of paragraph 1, wherein the dynamic state communication comprises a dynamic state index configured to identify a class corresponding to the dynamic state of the mobile apparatus.
13. The method of paragraph 1, wherein at least one of (a) the base station apparatus receives a plurality of dynamic state communications in a periodic or regular manner during the communication session and the base station apparatus determines the new radius responsive to receiving each respective dynamic state communication of the plurality of dynamic state communications or (b) the dynamic state communication is provided by the mobile apparatus in response to the mobile apparatus identifying a change in the mobile apparatuses dynamic state.
14. An apparatus comprising at least one processor and at least one memory storing computer program instructions, the apparatus configured to control operation of a base station, the at least one memory and the computer program code are configured to, with the processor, cause the apparatus to at least:
   cause the base station to perform conical scanning of a mobile apparatus, wherein the base station is configured to communicate via wireless communications using beamforming, a communication session between the base station and the mobile apparatus has been established, and the conical scanning of the mobile apparatus comprises transmitting a tracking beam that rotates about a path centered on a position associated with the mobile apparatus and characterized by a radius;
   receive a dynamic state communication generated by the mobile apparatus, the dynamic state communication providing an indication of a dynamic state of the mobile apparatus;
   determine, based at least in part on the dynamic state of the mobile apparatus, a new radius; and
   cause the base station to perform the conical scanning of the mobile apparatus by transmitting the tracking beam that rotates about the path centered on the position associated with the mobile apparatus and characterized by the new radius.
15. The apparatus of paragraph 14, wherein the dynamic state of the mobile apparatus corresponds to at least one of (a) a magnitude of a velocity of the mobile apparatus or (b) a magnitude of an acceleration of the mobile apparatus.
16. The apparatus of paragraph 14, wherein (a) the new radius is larger than the radius when the dynamic state of the mobile apparatus has substantially changed since a determination of the radius and (b) the new radius is the same as or smaller than the radius when the dynamic state of the mobile apparatus has not substantially changed since the determination of the radius.
17. The apparatus of paragraph 14, wherein the new radius is determined based at least in part on the dynamic state of the mobile apparatus and a dynamic state-radius model.
18. The apparatus of paragraph 17, wherein the dynamic state-radius model is a machine learning-trained model that is trained during the communication session between the base station and the mobile apparatus.
19. The apparatus of paragraph 14, wherein the dynamic state communication comprises one or more of a magnitude of an acceleration of the mobile apparatus, a magnitude of a velocity of the mobile apparatus, or sensor data captured by one or more sensors of the mobile apparatus and corresponding to motion of the mobile apparatus.
20. A computer program product comprising at least one non-transitory computer-readable storage medium having computer-readable program code and/or instruction portions stored therein, the computer-readable program code and/or instruction portions comprise executable portions configured, when executed by a processor of an apparatus configured to control operation of a base station, to cause the apparatus to:
   cause the base station to perform conical scanning of a mobile apparatus, wherein the base station is configured to communicate via wireless communications using beamforming, a communication session between the base station and the mobile apparatus has been established, and the conical scanning of the mobile apparatus comprises transmitting a tracking beam that rotates about a path centered on a position associated with the mobile apparatus and characterized by a radius;
   receive a dynamic state communication generated by the mobile apparatus, the dynamic state communication providing an indication of a dynamic state of the mobile apparatus;
   determine, based at least in part on the dynamic state of the mobile apparatus, a new radius; and
   cause the base station to perform the conical scanning of the mobile apparatus by transmitting the tracking beam that rotates about the path centered on the position associated with the mobile apparatus and characterized by the new radius.

### BRIEF DESCRIPTION OF THE DRAWINGS

Having thus described certain example embodiments in general terms, reference will hereinafter be made to the accompanying drawings, which are not necessarily drawn to scale, and wherein:
Figure 1 is a block diagram showing an example system of one embodiment of the present disclosure;
Figure 2A is a block diagram of a base station apparatus that may be specifically configured in accordance with an example embodiment;
Figure 2B is a block diagram of a mobile apparatus that may be specifically configured in accordance with an example embodiment;
Figure 3 is a conceptual diagram illustrating various features of various embodiments;
Figure 4 is a flowchart illustrating operations performed, such as by the mobile apparatus of Figure 2B, in accordance with an example embodiment; and
Figure 5 is a flowchart illustrating operations performed, such as by the base station apparatus of Figure 2A, in accordance with an example embodiment.

### DETAILED DESCRIPTION

Some embodiments will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. The term "or" (also denoted "/") is used herein in both the alternative and conjunctive sense, unless otherwise indicated. The terms "illustrative" and "exemplary" are used to be examples with no indication of quality level. Like reference numerals refer to like elements throughout. As used herein, the terms "data," "content," "information," and similar terms may be used interchangeably to refer to data capable of being transmitted, received and/or stored in accordance with embodiments of the present invention. As used herein, the terms "substantially" and "approximately" refer to values and/or tolerances that are within manufacturing and/or engineering guidelines and/or limits. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware.

### I. General Overview

Various embodiments provide methods, apparatus, systems, and computer program products for performing tracking of a mobile apparatus in a beam steering network using dynamic state information corresponding to the mobile apparatus. In various embodiments, a communication session is established between a base station and a mobile apparatus. The base station performs conical scanning of the mobile apparatus. For example, the base station transmits a tracking beam that rotates about a path centered on a position associated with the mobile apparatus and characterized by a radius. Any changes in the signal-to-noise ratio of the tracking beam received by the mobile apparatus as the tracking beam rotates about the path is indicative in changes in the location of the mobile apparatus with respect to the position associated with the mobile apparatus about which the path is centered. Dynamic state information is used to determine the radius of the path about which the tracking beam rotates.

In various embodiments, the dynamic state information is indicative of the dynamic state of the mobile apparatus. For example, the mobile apparatus includes one or more sensors that are configured to capture information that may be indicative of movement of the mobile apparatus, in various embodiments. For example, the dynamic state of the mobile apparatus corresponds to a velocity vector, magnitude of a velocity, acceleration vector, magnitude of an acceleration and/or the like of the mobile apparatus, in various embodiments.

For example, in 5G and likely future generation wireless communication technologies, beam steering is used to enable high bandwidth, relatively low power (compared to non-beam steering transmissions with comparable received signal strength), and/or high signal-to-noise ratio communications. Beam steering is a set of techniques used to focus the direction and shape of a radiation pattern. In wireless communications, beam steering changes the direction of the data signal and narrows the width of the data signal, typically by manipulating relative phase and amplitude shifts of the signal through an array of multiple antenna elements. Thus, the data signal transmitted by a base station via beam steering is transmitted through a narrow arc in a direction toward the mobile apparatus.

If the mobile apparatus moves outside of the narrow arc within which the base station transmits the data signal, the communication session between the mobile apparatus and the base station is interrupted. When the communication session is interrupted, the mobile apparatus experiences reduced bandwidth capabilities or a loss of connection to the wireless network altogether. Therefore, there exists technical problems regarding how to ensure the communication session between a base station and a mobile apparatus is not interrupted due to the mobile apparatus's motion.

Various embodiments provide technical solutions to these technical challenges. For example, in various embodiments, the base station apparatus configured to control operation of a base station causes the base station to perform conical scanning to track a position associated with the mobile apparatus. To perform the conical scanning, the base station (e.g., an antenna array of the base station) transmits a tracking beam that rotates about a path centered on a position associated with the mobile apparatus and characterized by a radius. Any changes in the signal-to-noise ratio of the tracking beam received by the mobile apparatus as the tracking beam rotates about the path is indicative in changes in the location of the mobile apparatus with respect to the position associated with the mobile apparatus about which the path is centered.

Various embodiments relate to the determination of the radius of the path about which the tracking beam rotates. For example, if the mobile apparatus moves from the interior of the path to the exterior of the path during an iteration of the conical scanning, the communication session between the base station and the mobile apparatus will be interrupted. In various embodiments, the radius that characterizes the path is determined based at least in part on a dynamic state of the mobile apparatus. For example, if the dynamic state of the mobile apparatus indicates that the mobile apparatus is accelerating or is traveling at a higher speed than previously, a new radius may be determined that is larger than the current radius. The base station performs the conical scanning by transmitting the tracking beam around the path that is centered on a position associated with the mobile apparatus and that is characterized by the new radius. In an example scenario where the dynamic state of the mobile apparatus indicates that the mobile apparatus is not accelerating (e.g., the magnitude of the velocity of the mobile apparatus is constant or decreasing), the new radius may be the same as the current radius or smaller than the current radius.

Therefore, various embodiments provide technical solutions that improve the base station's abilities to track the mobile apparatus such that communication sessions between the mobile apparatus and the base station is not interrupted. Moreover, various embodiments provide technical solutions that improve the base station's abilities to track the mobile apparatus such that the base station may optimize the bandwidth of communication between the base station and the mobile apparatus.

### II. Example System Architecture

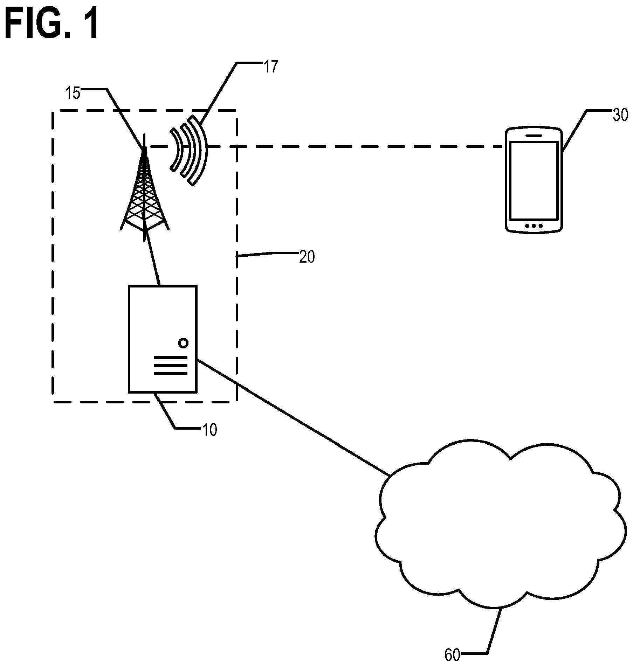

Figure 1 provides an illustration of an example system that can be used in conjunction with various embodiments of the present invention. As shown in Figure 1, the system includes one or more base stations 20, one or more mobile apparatus 30, one or more networks 60, and/or the like.

In the illustrated example system, the base station 20 comprises a base station apparatus 10 and one or more antenna arrays 15. In various embodiments, the base station 20 is an access point for a wireless network 60. For example, the base station may be a wireless network access point and/or gateway such as Wi-Fi network access point, cellular network access point, Bluetooth access point, 5G radio communications network access point, and/or other radio frequency-based network access point. In various embodiments, the base station apparatus 10 is configured to control operation of the base station 20. For example, the base station apparatus 10 causes an antenna array 15 to transmit a data signal 17 via which the base station 20 provides communication network access to the mobile apparatus 30. For example, the base station apparatus 10 may be configured to cause an antenna array 15 to use beamforming and/or beam steering to transmit a data signal 17.

In an example embodiment, a base station 20 is a gNodeB (gNB), cell tower, and/or the like. In an example embodiment, the base station apparatus 10 is a server, group of servers, distributed computing system, part of a cloud-based computing system, and/or other computing system. In various embodiments, mobile apparatus 30 is user equipment such as a mobile phone, smartphone, tablet, laptop, in vehicle navigation system, vehicle control system, a mobile computing device, a mobile data gathering platform, personal digital assistant (PDA), and/or the like.

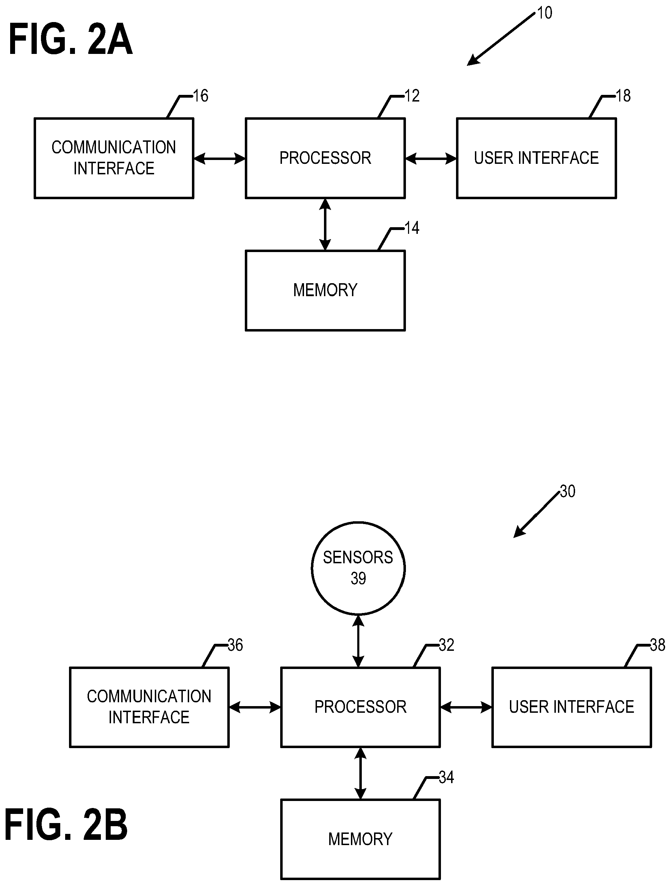

In an example embodiment, a base station apparatus 10 may comprise components similar to those shown in the example base station apparatus 10 diagrammed in Figure 2A. In an example embodiment, the base station apparatus 10 is configured to cause a communication session between the base station 20 and a mobile apparatus 30 to be established, cause performance of conical scanning of the mobile apparatus 30, act as a communication network access point for the mobile apparatus during the communication session, receive and process dynamic state communications provided by the mobile apparatus, modify the performance of the conical scanning of the mobile apparatus 30 based on the processing of a dynamic state communication, and/or the like. In various embodiments, the base station apparatus 10 comprises a baseband unit (BBU), remote radio head (RRH), and/or the like.

For example, as shown in Figure 2A, the base station apparatus 10 may comprise a processor 12, memory 14, a user interface 18, a communication interface 16, and/or other components configured to perform various operations, procedures, functions, or the like described herein. In various embodiments, the base station apparatus 10 stores computer program code and/or instructions for performing various functions described herein, and/or the like (e.g., in memory 14), for example. In at least some example embodiments, the memory 14 is non-transitory.

In an example embodiment, the mobile apparatus 30 is configured to establish a communication session with a base station 20, provide tracking communications determined and/or generated based on reception of a tracking beam, capture sensor data indicative of the dynamic state of the mobile apparatus 30, transmit dynamic state communications, and/or the like.

In an example embodiment, the mobile apparatus 30 is user equipment. For example, the mobile apparatus 30 is a mobile computing device such as a smartphone, tablet, laptop, PDA, navigation system, vehicle control system, an Internet of things (IoT) device, and/or the like, in various embodiments. In an example embodiment, as shown in Figure 2B, the mobile apparatus 30 may comprise a processor 32, memory 34, a communication interface 36, a user interface 38, one or more sensors 39 and/or other components configured to perform various operations, procedures, functions or the like described herein. In various embodiments, the mobile apparatus 30 stores computer executable instructions for performing various functions described herein, and/or the like in memory 34. In at least some example embodiments, the memory 34 is non-transitory.

In various embodiments, the sensors 39 comprise one or more IMU sensors, one or more GNSS sensors, one or more radio sensors, and/or other sensors. In an example embodiment, the one or more IMU sensors comprise one or more accelerometers, gyroscopes, magnetometers, and/or the like. In various embodiments, the one or more GNSS sensor(s) are configured to communicate with one or more GNSS satellites and determine GNSS-based position estimates and/or other information based on the communication with the GNSS satellites. In various embodiments, the one or more radio sensors comprise one or more radio interfaces configured to observe and/or receive signals generated and/or transmitted by one or more access points, antenna arrays 15, and/or other computing entities. For example, the one or more radio interfaces may be configured (possibly in coordination with processor 32) to determine a locally unique identifier, globally unique identifier, signal-to-noise ratio, and/or operational parameters of a base station 20 or other radio node observed by the radio sensor(s). As used herein, a radio sensor observes a radio node by receiving, capturing, measuring and/or observing a signal generated and/or transmitted by the radio node. In an example embodiment, the interface of a radio sensor may be configured to observe one or more types of signals such as generated and/or transmitted in accordance with one or more protocols such as 5G, general packet radio service (GPRS), Universal Mobile Telecommunications System (UMTS), Code Division Multiple Access 2000 (CDMA2000), CDMA2000 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), High-Speed Downlink Packet Access (HSDPA), IEEE 802.11 (Wi-Fi), Wi-Fi Direct, 802.16 (WiMAX), ultra-wideband (UWB), infrared (IR) protocols, near field communication (NFC) protocols, Wibree, Bluetooth protocols, wireless universal serial bus (USB) protocols, and/or any other wireless protocol. For example, the interface of a radio sensor may be configured to observe signals of one or more modern global cellular formats such as GSM, WCDMA, TD-SCDMA, LTE, LTE-A, CDMA, NB-IoT and/or non-cellular formats such as WLAN, Bluetooth, Bluetooth Low Energy (BLE), Zigbee, Lora, and/or the like. For example, the interface(s) of the radio senor(s) may be configured to observe radio, millimeter, microwave, and/or infrared wavelength signals. In an example embodiment, the interface of radio sensor may be coupled to and/or part of a communication interface 36. In various embodiments, the sensors 39 may further comprise one or more image sensors configured to capture visual samples, such as digital camera(s), 3D cameras, 360° cameras, and/or image sensors. In various embodiments, the one or more sensors 39 may comprise various other sensors such as two dimensional (2D) and/or three dimensional (3D) light detection and ranging (LiDAR)(s), long, medium, and/or short range radio detection and ranging (RADAR), ultrasonic sensors, electromagnetic sensors, (near-) infrared (IR) cameras.

In an example embodiment, the mobile apparatus 30 is in electronic communication with one or more wired and/or wireless networks 60 via a communication session established between the base station 20 and the mobile apparatus 30. For example, the wireless or wired networks 60 may include, for example, a wired or wireless Personal Area Network (PAN), Local Area Network (LAN), Metropolitan Area Network (MAN), Wide Area Network (WAN), cellular network, and/or the like. In an example embodiment, a network 60 comprises the automotive cloud, digital transportation infrastructure (DTI), radio data system (RDS)/ high definition (HD) radio or other digital radio system, and/or the like. For example, a mobile apparatus 30 may communicate with one or more Cloud-based computing resources via the base station 20 and one or more wired and/or wireless networks 60. For example, the Cloud may be a computer network that provides shared computer processing resources and data to computers and other devices connected thereto.

Certain example embodiments of the base station apparatus 10 and mobile apparatus 30 are described in more detail below with respect to Figures 2A and 2B.

### III. Example Operation(s)

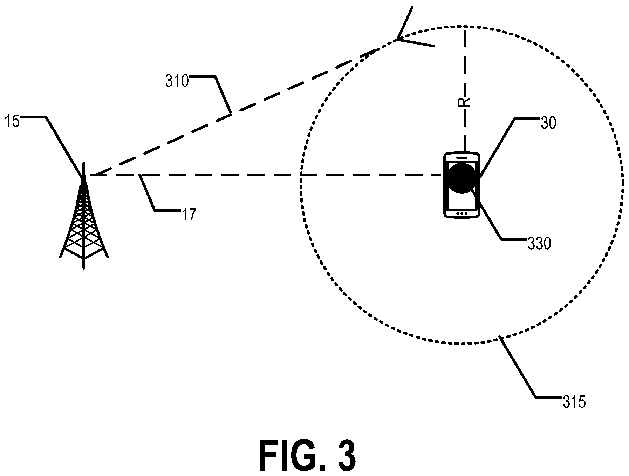

Figure 3 provides a conceptual diagram illustrating various concepts relating to performance of conical scanning of the mobile apparatus 30 by the base station 20. Figure 3 illustrates an antenna array 15 transmits a data signal 17 as part of a communication session with a mobile apparatus 30. For example, the data signal 17 is used, by the base station 20, to provide data (e.g. packets) to the mobile apparatus 30 as part of the communication session. The antenna array 15 transmits a tracking beam 310 that rotates (e.g. clockwise or counterclockwise) around path 315. The path 315 is centered on a position 330 associated with the mobile apparatus 30 and is characterized by a radius R. For example, in an example embodiment, the path 315 is a circle centered on the position 330 associated with the mobile apparatus 30 and characterized and/or having a radius R. In various embodiments, the data signal 17 and the tracking beam 310 may be transmitted by the same or different antenna arrays 15 of base station 20.

In various embodiments, the position 330 associated with the mobile apparatus 30 is a position estimate of the mobile apparatus 30 at a time when the conical scanning was last updated. For example, the base station apparatus 10 periodically and/or regularly updates the conical scanning of the mobile apparatus 30 performed by the base station 20. For example, the mobile apparatus 30 periodically and/or regularly (e.g., every tenth seconds, half second, second, five seconds, ten seconds, fifteen seconds, twenty seconds, thirty seconds, forty seconds, minute, two minutes, five minutes, and/or the like) generates and transmits dynamic state communications. The base station apparatus 10 receives a dynamic state communication (e.g., via one or more antenna array 15), processes the dynamic state communication (e.g., via processor 12), and updates the position 330 associated with mobile apparatus 30 about which the path 315 is centered and/or the radius R that characterizes the path 315 based at least in part on the processing of the dynamic state communication.

In various embodiments, the mobile apparatus 30 receives, detects, and/or observes the tracking beam 310. As the tracking beam 310 rotates and/or traverses about the path 315, the mobile apparatus 30 determines and/or monitors one or more observed characteristics of the tracking beam 310. For example, the mobile apparatus 30 determines and/or monitors the received signal strength, signal-to-noise ratio, and/or one or more other observed characteristics of the tracking beam 310. The mobile apparatus 30 may periodically and/or regularly (e.g., every tenth of a second, half of a second, second, five seconds, ten seconds, fifteen seconds, twenty seconds, thirty seconds, forty seconds, minute, two minutes, five minutes, and/or the like) generate and transmit a tracking communication that comprises tracking information such as one or more observed characteristics of tracking beam 310 at one or more points in time, a time or a location along the path 315 where one or more observed characteristics of the tracking beam 310 were at a minimum or a maximum, and/or the like. In various embodiments, the mobile apparatus 30 provides the tracking communication as part of the communication session between the mobile apparatus 30 and the base station 20.

The base station apparatus 10 receives the tracking communication, extracts the tracking information therefrom, and processes the tracking information included in the tracking communication. In various embodiments, the base station apparatus 10 uses the tracking information to determine a new or updated position estimate for the mobile apparatus 30. The new or updated position estimate for the mobile apparatus 30 may then be used to update the performance of the conical scanning performed by the base station 20. For example, the new or updated position estimate for the mobile apparatus 30 may be used as a new position 330 associated with the mobile apparatus 30, about which the a new path 315 is centered in the updated performance of the conical scanning performed by the base station 20.

In various embodiments, the mobile apparatus 30 periodically and/or regularly (e.g., every tenth of a second, half of a second, second, five seconds, ten seconds, fifteen seconds, twenty seconds, thirty seconds, forty seconds, minute, two minutes, five minutes, and/or the like) captures sensor data (e.g., using sensors 39) that is indicative of a dynamic state of the mobile apparatus 30. For example, the sensor data may be indicative of a velocity vector, magnitude of velocity, acceleration vector, magnitude of acceleration, and/or the like of the mobile apparatus 30.

In various embodiments, the mobile apparatus 30 periodically and/or regularly generates a dynamic state communication that includes dynamic state information. In an example embodiment, the dynamic state communication is generated in response to the capturing of the sensor data and/or the processing of the sensor data by the mobile apparatus 30 (e.g., processor 32).

In various embodiments, the mobile apparatus 30 compares the sensor data to previous sensor data to determine whether the dynamic state of the mobile apparatus 30 has changed. For example, the mobile apparatus 30 may compare the sensor data to previous sensor data based at least in part on one or more threshold criteria to determine whether sensor data indicates a (substantially) different dynamic state than the previously reported dynamic state or dynamic state information. In an example embodiment, the generating of the dynamic state communication is responsive to determining that the sensor data indicates that the dynamic state of the mobile apparatus 30 has (substantially) changed. For example, the generating of the dynamic state communication is responsive to determining that the sensor data satisfies one or more threshold criteria indicating a change in the dynamic state of the mobile apparatus 30. For example, the mobile apparatus 30 only generates and provides the dynamic state communication when the sensor data captured by the mobile apparatus 30 indicates that the dynamic state of the mobile apparatus 30 has (substantially) changed since the (immediately) previous capturing of sensor data.

In various embodiments, the dynamic state information includes the sensor data (e.g., captured by one or more sensors 39) indicative of the velocity vector, magnitude of velocity, acceleration vector, magnitude of acceleration, and/or other motion parameter of the mobile apparatus 30; a velocity vector, magnitude of velocity, acceleration vector, magnitude of acceleration, and/or other motion parameter of the mobile apparatus 30 determined by the mobile apparatus based on the captured sensor data. The mobile apparatus 30 transmits the dynamic state communication as part of the communication session between the mobile apparatus 30 and the base station 20. In an example embodiment, a dynamic state communication and a tracking communication are provided at the same time (e.g., via a same packet) or at different times (e.g., via different packets).

The base station apparatus 10 receives the dynamic state communication (e.g., via an antenna array 15), extracts the dynamic state information therefrom, and processes the dynamic state information. In various embodiments, the base station apparatus 10 determines a dynamic state of the mobile apparatus 30 based on the processing of the dynamic state information. In various embodiments, the dynamic state is a classification, a scalar number, or a vector/array of numbers. For example, in an example embodiment, the dynamic state is a classification determined based on the magnitude of the velocity and/or acceleration of the mobile apparatus 30. For example, the classification of may be selected from a set of classes such as very high, high, medium, low, not moving or a set of classes such as highway/freeway/interstate travel, arterial road travel, neighborhood/in-city/town or bike travel, pedestrian travel, not moving; and/or other set of classes. In an example embodiment, the dynamic state of the mobile apparatus 30 is a scalar number such as the magnitude of the velocity of the mobile apparatus 30 or the magnitude of the acceleration of the mobile apparatus 30. In an example embodiment, the dynamic state of the mobile apparatus is a vector or an array of numbers that includes the magnitude of the velocity of the mobile apparatus 30 as one component thereof and the acceleration of the mobile apparatus 30 as another component thereof, for example.

Based on the dynamic state of the mobile apparatus 30, the base station apparatus 10 determines a new radius. For example, in various embodiments, the base station apparatus 10 stores the dynamic state of the mobile apparatus at a time ti during the communication session between the mobile apparatus 30 and the base station apparatus 10. The base station apparatus 10 determines the dynamic state of the mobile apparatus at time ti+i during the communication session between the mobile apparatus 30 and the base station apparatus 10. The base station then compares the dynamic state of the mobile apparatus 30 at time ti+i and the dynamic state of the mobile apparatus at time ti. Based on the result of comparing the dynamic state of the mobile apparatus 30 at time ti+i and the dynamic state of the mobile apparatus 30 at time ti, the base station apparatus 10 determines a new radius Ri+i. For example, in an example embodiment, responsive to the comparison of the dynamic state of the mobile apparatus 30 at time ti+i and the dynamic state of the mobile apparatus 30 at time ti indicates a change in the dynamics of the mobile apparatus 30 (e.g., an increased or decreased velocity and/or increased acceleration) the new radius Ri+i is larger than the current radius Rᵢ (e.g., the radius that was determined based on the dynamic state of the mobile apparatus 30 at time ti). In another example, in an example embodiment, responsive to the comparison of the dynamic state of the mobile apparatus 30 at time ti+i and the dynamic state of the mobile apparatus 30 at time ti indicates steady and/or constant dynamics of the mobile apparatus 30 (e.g., a constant velocity and/or a decreasing or zero acceleration) the new radius Rᵢ₊₁ is either the same or smaller than the current radius Rᵢ. The base station apparatus 10 then updates the performance of the conical scanning of the mobile apparatus 30 by the base station 20 based on the new radius Ri+i. For example, the new radius Ri+i may be used as the radius R that characterizes a new path 315 in the updated performance of the conical scanning performed by the base station 20.

### Exemplary Operation of a Mobile Apparatus

In various embodiments, one or more mobile apparatuses 30 establish communication sessions with a base station 20. As part of the communication session between a mobile apparatus 30 and the base station 20, the base station 20 performs conical scanning of the mobile apparatus 30 and the mobile apparatus 30 provides either periodic and/or regular dynamic state communications and/or triggered (based on changes in dynamic state of the mobile apparatus 30) dynamic state communications. Based on dynamic state information extracted from the dynamic state communication, the base station 20 determines a new radius that is used in the performance of the conical scanning of the mobile apparatus 30 by the base station 20. The conical scanning enables the base station 20 to prevent interruptions in the communication session between the mobile apparatus 30 and the base station 20 by keeping the data signal 17 directed toward the mobile apparatus 30 even when the mobile apparatus 30 is moving. In various embodiments, the conical scanning enables the base station 20 to improve, increase, and/or maximize the bandwidth of communication between the base station 20 and the mobile apparatus 30 via the data signal 17.

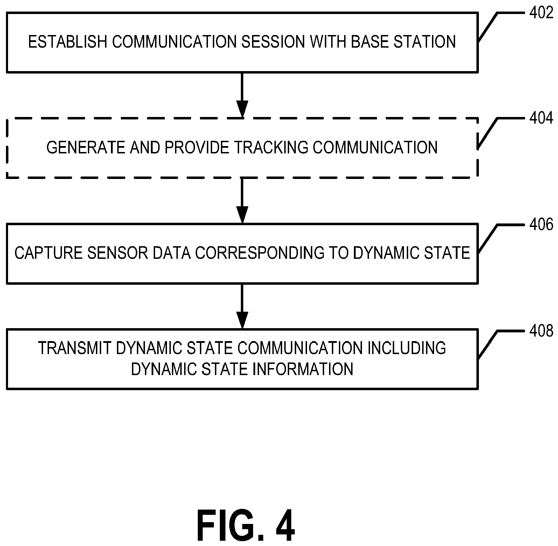

Figure 4 provides a flowchart illustrating various processes, procedures, operations, and/or the like performed by a mobile apparatus 30. Starting at block 402, a mobile apparatus 30 establishes a communication session with a base station 20. In various embodiments, the base station 20 is configured to communicate with one or more mobile apparatus 30 via wireless communications using beam steering. For example, in an example embodiment, the base station 20 is a gNB and/or a base station 20 configured to communicate with one or more mobile apparatuses 30 via 5G communications. For example, a mobile apparatus 30 comprises means, such as processor 32, memory 34, communication interface 36, and/or the like, for establishing a communication session between the mobile apparatus 30 and the base station 20.

At block 404, the mobile apparatus 30 observes and/or detects the tracking beam 310 and generates and transmits a tracking communication comprising tracking information. In various embodiments, the tracking information includes one or more observed characteristics of tracking beam 310 at one or more points in time, a time or a location along the path 315 where one or more observed characteristics of the tracking beam 310 were at a minimum or a maximum, and/or the like. For example, the mobile apparatus comprises means, such as processor 32, memory 34, communication interface 36, sensors 39, and/or the like, for observing and/or detecting the tracking beam 310 and generating and transmitting a tracking communication comprising tracking information. For example, a radio interface of the sensors 39 may observe and/or detect the tracking beam 310 and the processor 32 may determine one or more observed characteristics of the tracking beam 310. The processor 32 may then cause the communication interface 36 to provide a tracking communication comprising at least a portion of the tracking information. For example, the mobile apparatus 30 is configured to transmit and/or provide the tracking communication as part of the communication session between the mobile apparatus 30 and the base station 20. In various embodiments, the base station apparatus 10 is configured to use tracking information extracted from the tracking communication to determine a new or updated position 330 associated with the mobile apparatus 30 for use in an updated performance of the conical scanning.

At block 406, the mobile apparatus 30 captures sensor data. For example, the mobile apparatus 30 comprises means, such as processor 32, memory 34, sensors 39, and/or the like, for capturing sensor data. In various embodiments, the mobile apparatus 30 captures sensor data (e.g., using sensors 39) that is indicative of a dynamic state of the mobile apparatus 30. For example, the sensor data may be indicative of a velocity vector, magnitude of velocity, acceleration vector, magnitude of acceleration, and/or the like of the mobile apparatus 30. In various embodiments, the sensor data is GNSS sensor data, accelerometer sensor data, gyroscope sensor data, magnetic field sensor data, barometric pressure sensor data, radio interface sensor data, and/or other sensor data.

At block 408, the mobile apparatus 30 generates and provides a dynamic state communication. For example, the mobile apparatus 30 comprises means, such as processor 32, memory 34, communication interface 36, and/or the like, for generating and providing a dynamic state communication. In an example embodiment, the dynamic sate communication includes dynamic state information. In various embodiments, the mobile apparatus 30 generates the dynamic state information based at least in part on at least a portion of the sensor data captured at block 406. For example, the dynamic state information may include at least a portion of the sensor data captured at block 406. In another example, the dynamic state information may include a velocity vector, magnitude of velocity, acceleration vector, magnitude of acceleration, and/or other motion parameter describing the motion and/or dynamics of the mobile apparatus 30 when the sensor data was captured. In an example embodiment, the mobile apparatus 30 determines a classification corresponding to the dynamic state of the mobile apparatus 30 based on a set of (standardized) classes. The dynamic state information may then include a dynamic state index configured to identify a class corresponding to the dynamic state of the mobile apparatus 30.

The mobile apparatus 30 transmits the dynamic state communication as part of the communication session between the mobile apparatus 30 and the base station 20. In various embodiments, the base station apparatus 10 is configured to use dynamic state information extracted from the dynamic state communication to determine a new radius R for use in an updated performance of the conical scanning.

In various embodiments, one or more of block 404, 406, and/or 408 are performed periodically and/or regularly (e.g., every tenth of a second, half of a second, second, five seconds, ten seconds, fifteen seconds, twenty seconds, thirty seconds, forty seconds, minute, two minutes, five minutes, and/or the like) during the duration of the communication session. For example, the base station apparatus 10 is configured to periodically and/or regularly update the performance of the conical scanning of the mobile apparatus 30 by the base station 20 based on tracking information extracted from a tracking communication and/or dynamic state information extracted from a dynamic state communication.

In an example embodiment, the mobile apparatus is configured to determine whether the captured sensor data indicates a (substantial) change in the dynamic state of the mobile apparatus 30 (e.g., compared to previously captured sensor data) and to perform block 408 in response to determining that the sensor data captured at block 406 indicates a (substantial) change in the dynamic state of the mobile apparatus 30 compared to the (immediately) previous iteration of sensor data. For example, in an example embodiment, when the sensor data does not indicate a (substantial) change in the dynamic state of the mobile apparatus 30, the mobile apparatus 30 may not perform block 408 on that iteration of the performance of blocks 404, 406, and/or 408.

### Exemplary Operation of a Base Station Apparatus

In various embodiments, a base station apparatus 10 is configured to control operation of a base station 20 such that a communication session between the base station 20 and a mobile apparatus 30 such that the communication session is not interrupted (e.g., by the mobile apparatus 30 moving out of the narrow beam of the transmitted data signal 17) and/or so that the bandwidth provided to the mobile apparatus 30 via the communication session is maximized and/or increased (compared to conventional scenarios). For example, the base station 20 performs conical scanning of the mobile apparatus 30 so as to track the location of the mobile apparatus 30. Performing the conical scanning of the mobile apparatus 30 includes transmitting a tracking beam 310 that rotates about a path 315 centered on a position 330 associated with the mobile apparatus 30 and characterized by a radius R. The radius R is updated based on the dynamic state of the mobile apparatus 30.

Updating the radius R based on the dynamic state of the mobile apparatus 30 enables the base station 20 to track the location of the mobile apparatus 30 without interruption of the communication session between the base station 20 and the mobile apparatus 30, while enabling the base station to focus or narrow the transmitted data signal 17 (and provide larger bandwidth communications) when the location of the mobile apparatus 30 is well known.

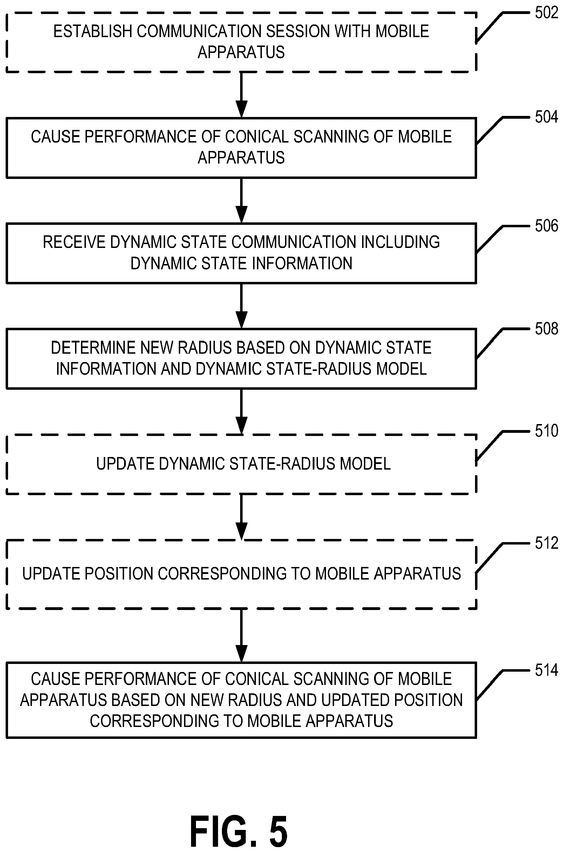

Figure 5 provides a flowchart illustrating various processes, procedures, operations, and/or the like performed by the base station apparatus 10 to cause the base station 20 to perform mobile apparatus dynamic state-based target tracking. Starting at block 502, the base station apparatus 10 causes the base station 20 to establish a communication session with a mobile apparatus 30. For example, the base station apparatus 10 comprises means, such as processor 12, memory 14, communication interface 16, and/or the like, for causing the base station 20 to establish the communication session with the mobile apparatus 30. For example, the base station apparatus 10 may cause the base station 20 to perform beam acquisition. In various embodiments, the base station 20 performs one or more beam acquisition processes that are configured for establishing communication sessions in a beam steering network (e.g., 5G network and/or other communication network that uses beam steering and/or beamforming).

At block 504, the base station apparatus 10 causes the base station 20 to perform conical scanning of the mobile apparatus 30. For example, the base station apparatus 10 comprises means, such as processor 12, memory 14, and/or the like, to control the one or more antenna arrays 15 to cause the base station 20 to perform conical scanning of the mobile apparatus 30. In an example embodiment, performing conical scanning of the mobile apparatus 30 includes transmitting a tracking beam 310 that rotates about a path 315 centered on a position 330 associated with the mobile apparatus 30 and characterized by a radius R.

In various embodiments, the conical scanning is initiated using a position 330 associated with the mobile apparatus 30 determined and/or received (by the base station apparatus 10) as part of the establishing of the communication session between the base station 20 and the mobile apparatus 30. For example, the mobile apparatus 30 may transmit a position estimate indicating a location of the mobile apparatus 30 or information that may be used by the base station apparatus 10 to determine a position estimate indicating a location of the mobile apparatus 30 for receipt by the base station 20 as part of the establishing of the communication session between the base station 20 and the mobile apparatus 30. In various embodiments, the conical scanning is initiated using a default radius R or a radius R that is selected and/or determined based at least in part on a dynamic state of the mobile apparatus 30 when the communication session between the mobile apparatus 30 and the base station 20 is established. For example, the mobile apparatus 30 may transmit dynamic state information for receipt by the base station 20 as part of establishing of the communication session between the base station 20 and the mobile apparatus 30.

At block 506, the base station apparatus 10 receives a dynamic state communication including dynamic state information. For example, the base station apparatus 10 comprises means, such as processor 12, memory 14, communication interface 16, and/or the like, for receiving a dynamic state communication including dynamic state information. For example, the mobile apparatus 30 may transmit a dynamic state communication and the base station 20 may receive the dynamic station communication via an antenna array 15. In various embodiments, the base station apparatus 10 extracts the dynamic state information from the dynamic state communication. In various embodiments, the dynamic state information includes the sensor data (e.g., captured by one or more sensors 39 of the mobile apparatus 30) indicative of the velocity vector, magnitude of velocity, acceleration vector, magnitude of acceleration, and/or other motion parameter of the mobile apparatus 30; a velocity vector, magnitude of velocity, acceleration vector, magnitude of acceleration, and/or other motion parameter of the mobile apparatus 30 determined by the mobile apparatus based on the sensor data captured by the sensors 39 of the mobile apparatus 30.

In various embodiments, the base station apparatus 10 may also receive a tracking communication including tracking information. For example, the mobile apparatus 30 may transmit a tracking communication and the base station 20 may receive the tracking communication via an antenna array 15. In various embodiments, the base station apparatus 10 extracts the tracking information from the tracking communication. In various embodiments, the tracking information includes one or more observed characteristics of the tracking beam 310 at one or more points in time, a time or a location along the path 315 where one or more observed characteristics of the tracking beam 310 were at a minimum or a maximum, and/or the like.

At block 508, the base station apparatus 10 determines a new radius based on the dynamic state information and a dynamic state-radius model. For example, the base station apparatus 10 comprises means, such as processor 12, memory 14, and/or the like, for determining a new radius based on the dynamic state information and a dynamic state-radius model. For example, the base station apparatus 10 may process the dynamic state information to determine a dynamic state of the mobile apparatus 30. In various embodiments, the dynamic state is a classification, a scalar number, or a vector/array of numbers. For example, in an example embodiment, the dynamic state is a classification determined based on the magnitude of the velocity and/or acceleration of the mobile apparatus 30. For example, the classification may be selected from a set of classes such as very high, high, medium, low, not moving or a set of classes such as highway/freeway/interstate travel, arterial road travel, neighborhood/in-city/town or bike travel, pedestrian travel, not moving; and/or other set of classes. In an example embodiment, the dynamic state of the mobile apparatus 30 is a scalar number such as the magnitude of the velocity of the mobile apparatus 30 or the magnitude of the acceleration of the mobile apparatus 30. In an example embodiment, the dynamic state of the mobile apparatus is a vector or an array of numbers that includes the magnitude of the velocity of the mobile apparatus 30 as one component thereof and the acceleration of the mobile apparatus 30 as another component thereof, for example.

In various embodiments, the base station apparatus 10 stores a dynamic state-radius model in memory 14. In various embodiments, the dynamic state-radius model is configured to provide a mapping between a dynamic state and a new radius. In various embodiments, the dynamic state-radius model is configured to provide a mapping between a change in sequential dynamic states of a mobile apparatus 30 and a new radius. In various embodiments, the dynamic state-radius model is look-up table, a function that can be evaluated (e.g., based on the dynamic state) by the base station apparatus 10 faster than the period between transmissions of sequential dynamic state communications by the mobile apparatus 30, and/or the like. For example, in an example embodiment where the mobile apparatus 30 transmits dynamic state communications periodically and/or regularly with a period of one second between sequential dynamic state communications, the dynamic state-radius model is configured such that the base station apparatus 10 can determine a new radius based on the dynamic state-radius model and the dynamic state in less than one second.

In various embodiments, when the base station apparatus 10 determines that the dynamic state of the mobile apparatus 30 has substantially changed since the determination of the current radius, the new radius is larger than the current radius. When the base station apparatus 10 determine that the dynamic state of the mobile apparatus 30 has not substantially changed since the determination of the current radius, the new radius is the same or smaller than the current radius.

In an example embodiment, the dynamic state is indicative and/or includes a velocity or an indication of a velocity of the mobile apparatus 30. In various embodiments, the base station apparatus 10 stores the dynamic state of the mobile apparatus at a time ti during the communication session between the mobile apparatus 30 and the base station apparatus 10. The base station apparatus 10 determines the dynamic state of the mobile apparatus at time ti+i during the communication session between the mobile apparatus 30 and the base station apparatus 10. The base station then compares the dynamic state of the mobile apparatus 30 at time ti+i and the dynamic state of the mobile apparatus at time ti. Based on the result of comparing the dynamic state of the mobile apparatus 30 at time ti+i and the dynamic state of the mobile apparatus 30 at time ti and the dynamic state-radius model, the base station apparatus 10 determines a new radius Ri+i. For example, in an example embodiment, responsive to the comparison of the dynamic state of the mobile apparatus 30 at time ti+i and the dynamic state of the mobile apparatus 30 at time ti indicates a substantial change in the dynamics of the mobile apparatus 30 (e.g., an increased or decreased velocity and/or increased acceleration) the new radius Ri+i is larger than the current radius Rᵢ (e.g., the radius that was determined based on the dynamic state of the mobile apparatus 3 0 at time ti).

For example, when a change in the velocity of the mobile apparatus 30 between time ti and time ti+i satisfies a threshold requirement, the new radius Ri+i is larger than the radius Rᵢ. For example, when the acceleration of the mobile apparatus 30 between time ti and time tᵢ₊₁ (|vᵢ₊₁ - vᵢ|/(tᵢ₊₁ - tᵢ), where vi is the velocity of the mobile apparatus at time ti and vi+i is the velocity of the mobile apparatus at time ti+i) is greater than a threshold acceleration or the change in velocity of the mobile apparatus 30 between time ti and time ti+i (|vᵢ₊₁ - vᵢ|) is greater than a threshold change in velocity, the new radius Ri+i is larger than the radius Rᵢ. In another example, in an example embodiment, responsive to the comparison of the dynamic state of the mobile apparatus 30 at time ti+i and the dynamic state of the mobile apparatus 30 at time ti indicating steady and/or constant dynamics of the mobile apparatus 30 (e.g., a constant velocity and/or a decreasing or zero acceleration) the new radius Rᵢ₊₁ is either the same or smaller than the current radius Rᵢ. For example, when it is determined that the change in velocity of the mobile apparatus 30 between time ti and time ti+i does not satisfy the threshold requirement, the new radius Ri+i is the same or smaller than the radius Rᵢ. For example, the base station apparatus 10 may determine the dynamic state of the mobile apparatus 30 has substantially changed when the threshold requirement is satisfied and that the dynamic state of the mobile apparatus 30 has not substantially changed when the threshold requirement is not satisfied.

In various embodiments, the dynamic state is indicative and/or includes an acceleration or an indication of an acceleration of the mobile apparatus 30. For example, in an example embodiment, when the magnitude of the acceleration satisfies a threshold requirement (e.g., is greater than a threshold value), the dynamic state is determined to indicate a change in the dynamics of the mobile apparatus 30 (e.g., an increased or decreased velocity and/or increased acceleration) the new radius Ri+i is larger than the current radius Rᵢ (e.g., the radius that was determined based on the dynamic state of the mobile apparatus 30 at time ti). In another example, in an example embodiment, when the magnitude of the acceleration does not satisfy the threshold requirement (e.g., is less than the threshold value), the dynamic state is determined to indicate steady and/or constant dynamics of the mobile apparatus 30 (e.g., a constant velocity and/or a small or zero acceleration) the new radius Rᵢ₊₁ is either the same or smaller than the current radius Rᵢ. For example, the base station apparatus 10 may determine the dynamic state of the mobile apparatus 30 has substantially changed when the threshold requirement is satisfied and that the dynamic state of the mobile apparatus 30 has not substantially changed when the threshold requirement is not satisfied.

In various embodiments, the dynamic state is a classification of the dynamics of the mobile apparatus 30. When the classification of the dynamics of the mobile apparatus 30 is the same at time ti+i as at time ti, the dynamic state is determined to indicate steady and/or constant dynamics of the mobile apparatus 30 (e.g., a constant velocity and/or a small or zero acceleration) the new radius Rᵢ₊₁ is either the same or smaller than the current radius Rᵢ. When the classification of the dynamics of the mobile apparatus 30 is different at time ti+i and time ti, the dynamic state is determined to indicate a change in the dynamics of the mobile apparatus 30 (e.g., an increased or decreased velocity and/or increased acceleration) the new radius Ri+i is larger than the current radius Rᵢ (e.g., the radius that was determined based on the dynamic state of the mobile apparatus 30 at time ti). For example, the base station apparatus 10 may determine the dynamic state of the mobile apparatus 30 has substantially changed when the classification of the dynamics of the mobile apparatus 30 has changed between time ti and time ti+i and that the dynamic state of the mobile apparatus 30 has not substantially changed when the classification of the dynamics of the mobile apparatus 30 has not changed between time ti and time ti+i.

In various embodiments, the dynamic state-radius model is specific to a particular base station 20 and/or one or more characteristics of the mobile apparatus 30. In an example embodiment, the dynamic state-radius model is universal for different base stations 20 and/or different mobile apparatuses 30.

In various embodiments, the dynamic state-radius model is a trained machine-learning based model. In an example embodiment, the dynamic state-radius model is a static and/or pre-determined model. For example, the dynamic state-radius model is trained prior to the establishing of the communication session between the base station 20 and the mobile apparatus 30. In another example embodiment, the dynamic state-radius model is determined and/or trained during the communication session between the base station 20 and the mobile apparatus 30.

At block 510, in various embodiments wherein the dynamic state-radius model is updated and/or trained during the communication session between the base station 20 and the mobile apparatus 30, the base station apparatus 10 updates and/or further trains the dynamic state-radius model. For example, the base station apparatus 10 is configured to update and/or train the dynamic state-radius model. For example, the base station apparatus 10 comprises means, such as processor 12, memory 14, and/or the like, for updating and/or training the dynamic state-radius model.

For example, information regarding the bandwidth of the communication between the base station 20 and the mobile apparatus 30 between time ti and time ti+i, the dynamic state at time ti, radius Rᵢ and/or the like may be used to further train the dynamic state-radius model. In various embodiments, the dynamic state-radius model is updated using a machine learning training technique. The updating or training of the dynamic state-radius model may be used to generate an updated look-up table and/or updated function coefficients for use in determining the new radius at a future time (e.g., time tᵢ₊₂ or the like).

In an example embodiment, the training of the dynamic state-radius model is configured to converge in a training time that is less than the temporal length of the communication session. For example, in an example embodiment, the training of the dynamic state-radius model is configured to converge within one minute, two minutes, five minutes, and/or the like of the establishing of the communication session between the base station 20 and the mobile apparatus 30.

At block 512, the base station apparatus 10 is configured to update the position 330 associated with the mobile apparatus 30. For example, the base station apparatus 10 comprises means, such as processor 12, memory 14, communication interface 16, and/or the like, for updating the position 330 associated with the mobile apparatus 30. For example, the tracking information and/or dynamic state information may be used to determine a new position estimate for the mobile apparatus 30. In another example embodiment, the base station apparatus 10 receives a position estimate of the mobile apparatus 30 provided and/or transmitted by the mobile apparatus 30 as part of the communication session. The base station apparatus 10 then updates the position 330 associated with the mobile apparatus 30 based on the position estimate of the mobile apparatus 30.

At block 514, the base station apparatus 10 causes performance of conical scanning of mobile apparatus 30 based on the new radius and updated position 330 associated with mobile apparatus 30. For example, the base station apparatus 10 comprises means, such as processor 12, memory 14, communication interface 16, and/or the like, for causing the base station to perform the conical scanning of the mobile apparatus 30 by the base station 20 using the new radius and the updated position of the mobile apparatus. For example, the base station apparatus 10 causes performance of the conical scanning of the mobile apparatus 30 including transmitting a tracking beam 310 that rotates about a path 315 centered on the updated position associated with the mobile apparatus 30 and characterized by the new radius.

### IV. Technical Advantages

Various embodiments provide technical solutions to the technical problems of maintaining communication sessions and/or not interrupting communications sessions between mobile apparatuses 30 and base stations 20 due to movement of the mobile apparatus in communication networks using beam steering.

For example, in 5G and likely future generation wireless communication technologies, beam steering is used to enable high bandwidth, relatively low power (compared to non-beam steering transmissions with comparable received signal strength), and/or high signal-to-noise ratio communications. Beam steering is a set of techniques used to focus the direction and shape of a radiation pattern. In wireless communications, beam steering changes the direction of the data signal 17 and narrows the width of the data signal 17, typically by manipulating relative phase and amplitude shifts of the signal through an array of multiple antenna elements. Thus, the data signal 17 transmitted by a base station 20 (e.g., antenna array 15) via beam steering is transmitted through a narrow arc in a direction toward the mobile apparatus 30.

If the mobile apparatus 30 moves outside of the narrow arc within which the base station 20 transmits the data signal 17, the communication session between the mobile apparatus 30 and the base station 20 is interrupted. When the communication session is interrupted, the mobile apparatus 30 experiences reduced bandwidth capabilities and/or communication. Therefore, there exists technical problems regarding how to ensure the communication session between a base station 20 and a mobile apparatus 30 is not interrupted due to the mobile apparatus's 30 motion.

Various embodiments provide technical solutions to these technical challenges. For example, in various embodiments, the base station apparatus 10 is configured to control operation of a base station 20 and causes the base station 20 to perform conical scanning to track a position 330 associated with the mobile apparatus 30. To perform the conical scanning, the base station 20 (e.g., an antenna array 15 of the base station 20) transmits a tracking beam 310 that rotates about a path 315 centered on a position 330 associated with the mobile apparatus 30 and characterized by a radius R. Any changes in the signal-to-noise ratio of the tracking beam 310 received by the mobile apparatus 30 as the tracking beam 310 rotates about the path 315 is indicative in changes in the location of the mobile apparatus 30 with respect to the position 330 associated with the mobile apparatus 30 about which the path 315 is centered.

Various embodiments relate to the determination of the radius R of the path 315 about which the tracking beam 310 rotates. For example, if the mobile apparatus 30 moves from the interior of the path 315 to the exterior of the path 315 during an iteration of the conical scanning, the communication session between the base station 20 and the mobile apparatus 30 will be interrupted (e.g., the base station 20 may need to use a beam acquisition techniques to re-stablish the communication session). In various embodiments, the radius R that characterizes the path 315 is determined based at least in part on a dynamic state of the mobile apparatus 30. For example, if the dynamic state of the mobile apparatus 30 indicates that the dynamics of the mobile apparatus is changing and/or has changed (e.g., an increased or decreased velocity and/or increased acceleration), a new radius may be determined that is larger than the current radius. In another example, if the dynamic state of the mobile apparatus 30 indicates that the dynamics of the mobile apparatus 30 is not changing and/or has not changed (e.g., a constant velocity and/or a decreasing or zero acceleration), a new radius may be determined that is the same size or smaller than the current radius. The base station 20 then performs the conical scanning by transmitting the tracking beam around the path that is centered on the position 330 associated with the mobile apparatus 30 and that is characterized by the new radius.

Therefore, various embodiments provide technical solutions that improve the base station's 20 abilities to track the mobile apparatus 30 such that communication sessions between the mobile apparatus 30 and the base station 20 is not interrupted. Moreover, various embodiments provide technical solutions that improve the base station's 20 abilities to track the mobile apparatus 30 such that the base station 20 may optimize the bandwidth of communication between the base station 20 and the mobile apparatus 30.

### V. Example Apparatus

The base station apparatus 10 and/or mobile apparatus 30 of an example embodiment may be embodied by or associated with a variety of computing devices including, for example, a navigation system including a global navigation satellite system (GNSS), a cellular telephone, a mobile phone, a personal digital assistant (PDA), a watch, a camera, a computer, an Internet of things (IoT) item, and/or other device that can observe the radio environment (e.g., receive radio frequency signals from network access points) in the vicinity of the computing device and/or that can store at least a portion of a positioning map. Additionally or alternatively, the base station apparatus 10 and/or mobile apparatus 30 may be embodied in other types of computing devices, such as a server, a personal computer, a computer workstation, a laptop computer, a plurality of networked computing devices or the like, that are configured to perform conical scanning using a radius determined based on the dynamic state of the mobile apparatus 30, capture sensor data and determine dynamic state information based on the sensor data, and/or the like.

In some embodiments, the processor 12, 32 (and/or co-processors or any other processing circuitry assisting or otherwise associated with the processor) may be in communication with the memory device 14, 34 via a bus for passing information among components of the apparatus. The memory device may be non-transitory and may include, for example, one or more volatile and/or non-volatile memories. In other words, for example, the memory device may be an electronic storage device (e.g., a non-transitory computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present invention. For example, the memory device could be configured to buffer input data for processing by the processor. Additionally or alternatively, the memory device could be configured to store instructions for execution by the processor.

As described above, the base station apparatus 10 and/or mobile apparatus 30 may be embodied by a computing entity and/or device. However, in some embodiments, the base station apparatus 10 and/or mobile apparatus 30 may be embodied as a chip or chip set. In other words, the base station apparatus 10 and/or mobile apparatus 30 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processor 12, 32 may be embodied in a number of different ways. For example, the processor 12, 32 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 12, 32 may include one or more processing cores configured to perform independently. A multi-core processor may enable multiprocessing within a single physical package. Additionally or alternatively, the processor 12, 32 may include one or more processors configured in tandem via the bus to enable independent execution of instructions, pipelining and/or multithreading.

In an example embodiment, the processor 12, 32 may be configured to execute instructions stored in the memory device 14, 34 or otherwise accessible to the processor. Alternatively or additionally, the processor may be configured to execute hard coded functionality. As such, whether configured by hardware or software methods, or by a combination thereof, the processor may represent an entity (e.g., physically embodied in circuitry) capable of performing operations according to an embodiment of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the algorithms and/or operations described herein when the instructions are executed. However, in some cases, the processor may be a processor of a specific device (e.g., a pass-through display or a mobile terminal) configured to employ an embodiment of the present invention by further configuration of the processor by instructions for performing the algorithms and/or operations described herein. The processor may include, among other things, a clock, an arithmetic logic unit (ALU) and logic gates configured to support operation of the processor.

In some embodiments, the base station apparatus 10 and/or mobile apparatus 30 may include a user interface 18, 38 that may, in turn, be in communication with the processor 12, 32 to provide output to the user, such as one or more navigable routes to a destination location and/or from an origin location, display of location dependent and/or triggered information, information received via a communication session between a base station 20 and the mobile apparatus 30, and/or the like, and, in some embodiments, to receive an indication of a user input. As such, the user interface 18, 38 may include one or more output devices such as a display, speaker, and/or the like and, in some embodiments, may also include one or more input devices such as a keyboard, a mouse, a joystick, a touch screen, touch areas, soft keys, a microphone, a speaker, or other input/output mechanisms. Alternatively or additionally, the processor may comprise user interface circuitry configured to control at least some functions of one or more user interface elements such as a display and, in some embodiments, a speaker, ringer, microphone and/or the like. The processor and/or user interface circuitry comprising the processor may be configured to control one or more functions of one or more user interface elements through computer program instructions (e.g., software and/or firmware) stored on a memory accessible to the processor 12, 32 (e.g., memory device 14, 34 and/or the like).

The base station apparatus 10 and/or mobile apparatus 30 may optionally include a communication interface 16, 36. The communication interface 16, 36 may be any means such as a device or circuitry embodied in either hardware or a combination of hardware and software that is configured to receive and/or transmit data from/to a network and/or any other device or module in communication with the apparatus. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

In various embodiments, base station apparatus 10 and/or mobile apparatus 30 may comprise a component (e.g., memory 14, 34, and/or another component) that stores a digital map (e.g., in the form of a geographic database) comprising a first plurality of data records, each of the first plurality of data records representing a corresponding traversable map element (TME). For example, the base station apparatus 10 may provide the mobile apparatus 30 with access to a digital map, digital map information, and/or other information via a communication session between the base station 20 and the mobile apparatus 30. At least some of said first plurality of data records map information/data indicate current traffic conditions along the corresponding TME. For example, the geographic database may include a variety of data (e.g., map information/data) utilized in various navigation functions such as constructing a route or navigation path, determining the time to traverse the route or navigation path, matching a geolocation (e.g., a GNSS determined location, a radio-based position estimate) to a point on a map, a lane of a lane network, and/or link, one or more localization features and a corresponding location of each localization feature, and/or the like. For example, the geographic database may comprise a positioning map comprising an access point registry and/or instances of network access point information corresponding to various network access points. For example, a geographic database may include road segment, segment, link, lane segment, or TME data records, point of interest (POI) data records, localization feature data records, and other data records. More, fewer or different data records can be provided. In one embodiment, the other data records include cartographic ("carto") data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GNSS data associations (such as using known or future map matching or geo-coding techniques), for example. In an example embodiment, the data records may comprise nodes, connection information/data, intersection data records, link data records, POI data records, and/or other data records.

In an example embodiment, the TME data records are links, lanes, or segments (e.g., maneuvers of a maneuver graph, representing roads, travel lanes of roads, streets, paths, navigable aerial route segments, and/or the like as can be used in the calculated route or recorded route information for determination of one or more personalized routes). The intersection data records are ending points corresponding to the respective links, lanes, or segments of the TME data records. The TME data records and the intersection data records represent a road network and/or other traversable network, such as used by vehicles, cars, bicycles, and/or other entities. Alternatively, the geographic database can contain path segment and intersection data records or nodes and connection information/data or other data that represent pedestrian paths or areas in addition to or instead of the vehicle road record data, for example. Alternatively and/or additionally, the geographic database can contain navigable aerial route segments or nodes and connection information/data or other data that represent an navigable aerial network, for example.

The TMEs, lane/road/link/path segments, segments, intersections, and/or nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database can include data about the POIs and their respective locations in the POI data records. The geographic database can also include data about places, such as cities, towns, or other communities, and other geographic features, such as bodies of water, mountain ranges, etc. Such place or feature data can be part of the POI data or can be associated with POIs or POI data records (such as a data point used for displaying or representing a position of a city). In addition, the geographic database can include and/or be associated with event data (e.g., traffic incidents, constructions, scheduled events, unscheduled events, etc.) associated with the POI data records or other records of the geographic database.

The geographic database can be maintained by the content provider (e.g., a map developer) in association with the services platform. By way of example, the map developer can collect geographic data to generate and enhance the geographic database. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database can be a master geographic database stored in a format that facilitates updating, maintenance, and development. For example, the master geographic database or data in the master geographic database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF) format) to organize and/or configure the data for performing navigation-related functions and/or services, such as route calculation, route guidance, map display, speed calculation, distance and travel time functions, and other functions. The navigation-related functions can correspond to vehicle navigation or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

### VI. Apparatus, Methods, and Computer Program Products

As described above, Figures 4 and 5 illustrate flowcharts of a base station apparatus 10 and/or mobile apparatus 30, methods, and computer program products according to an example embodiment of the invention. It will be understood that each block of the flowcharts, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by the memory device 14, 34 of an apparatus employing an embodiment of the present invention and executed by the processor 12, 32 of the apparatus. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
causing, by a base station apparatus, a base station to perform conical scanning of a mobile apparatus, wherein the base station apparatus is configured to control operation of a base station configured to communicate via wireless communications using beamforming, a communication session between the base station and the mobile apparatus has been established, and the conical scanning of the mobile apparatus comprises transmitting a tracking beam that rotates about a path centered on a position associated with the mobile apparatus and **characterized by** a radius;
receiving, by the base station apparatus, a dynamic state communication generated by the mobile apparatus, the dynamic state communication providing an indication of a dynamic state of the mobile apparatus;
determining, by the base station apparatus and based at least in part on the dynamic state of the mobile apparatus, a new radius; and
causing, by the base station apparatus, the base station to perform the conical scanning of the mobile apparatus by transmitting the tracking beam that rotates about the path centered on the position associated with the mobile apparatus and **characterized by** the new radius.

2. The method of claim 1, wherein the dynamic state of the mobile apparatus corresponds to at least one of (a) a magnitude of a velocity of the mobile apparatus or (b) a magnitude of an acceleration of the mobile apparatus.

3. The method of claim 1, wherein (a) the new radius is larger than the radius when the dynamic state of the mobile apparatus has substantially changed since a determination of the radius and (b) the new radius is the same as or smaller than the radius when the dynamic state of the mobile apparatus has not substantially changed since the determination of the radius.

4. The method of claim 1, wherein the position associated with the mobile apparatus is modified based on a location along the path wherein the base station apparatus detects a highest signal-to-noise ratio of a return tracking beam.

5. The method of claim 1, wherein the new radius is determined based at least in part on the dynamic state of the mobile apparatus and a dynamic state-radius model.

6. The method of claim 5, wherein the dynamic state-radius model is a look-up table.

7. The method of claim 5, wherein the dynamic state-radius model is a machine learning-trained model.

8. The method of claim 7, wherein the dynamic state-radius model is trained during the communication session between the base station and the mobile apparatus.

9. The method of claim 7, wherein the dynamic state-radius model is particular to the mobile apparatus or a characteristic of the mobile apparatus.

10. The method of claim 1, wherein the dynamic state communication comprises sensor data captured by one or more sensors of the mobile apparatus and corresponding to motion of the mobile apparatus.

11. The method of claim 1, wherein the dynamic state communication comprises at least one of a magnitude of an acceleration of the mobile apparatus or a magnitude of a velocity of the mobile apparatus.

12. The method of claim 1, wherein the dynamic state communication comprises a dynamic state index configured to identify a class corresponding to the dynamic state of the mobile apparatus.

13. The method of claim 1, wherein at least one of (a) the base station apparatus receives a plurality of dynamic state communications in a periodic or regular manner during the communication session and the base station apparatus determines the new radius responsive to receiving each respective dynamic state communication of the plurality of dynamic state communications or (b) the dynamic state communication is provided by the mobile apparatus in response to the mobile apparatus identifying a change in the mobile apparatuses dynamic state.

14. An apparatus comprising at least one processor and at least one memory storing computer program instructions, the apparatus configured to control operation of a base station, the at least one memory and the computer program code are configured to, with the processor, cause the apparatus to at least:
cause the base station to perform conical scanning of a mobile apparatus, wherein the base station is configured to communicate via wireless communications using beamforming, a communication session between the base station and the mobile apparatus has been established, and the conical scanning of the mobile apparatus comprises transmitting a tracking beam that rotates about a path centered on a position associated with the mobile apparatus and **characterized by** a radius;
receive a dynamic state communication generated by the mobile apparatus, the dynamic state communication providing an indication of a dynamic state of the mobile apparatus;
determine, based at least in part on the dynamic state of the mobile apparatus, a new radius; and
cause the base station to perform the conical scanning of the mobile apparatus by transmitting the tracking beam that rotates about the path centered on the position associated with the mobile apparatus and **characterized by** the new radius.

15. A computer program product comprising at least one non-transitory computer-readable storage medium having computer-readable program code and/or instruction portions stored therein, the computer-readable program code and/or instruction portions comprise executable portions configured, when executed by a processor of an apparatus configured to control operation of a base station, to cause the apparatus to:
cause the base station to perform conical scanning of a mobile apparatus, wherein the base station is configured to communicate via wireless communications using beamforming, a communication session between the base station and the mobile apparatus has been established, and the conical scanning of the mobile apparatus comprises transmitting a tracking beam that rotates about a path centered on a position associated with the mobile apparatus and **characterized by** a radius;
receive a dynamic state communication generated by the mobile apparatus, the dynamic state communication providing an indication of a dynamic state of the mobile apparatus;
determine, based at least in part on the dynamic state of the mobile apparatus, a new radius; and
cause the base station to perform the conical scanning of the mobile apparatus by transmitting the tracking beam that rotates about the path centered on the position associated with the mobile apparatus and **characterized by** the new radius.
